# EUROPEAN PATENT APPLICATION

(11) **EP 4 023 392 A1**
(43) Date of publication of application: **06.07.2022**
(21) Application number: 21217821.4
(22) Date of filing: 27.12.2021
(51) Int. Cl.: B24B 7/22, B24B 9/00, B24B 9/06, B24B 7/26, B24B 7/06, B24B 49/00, B23Q 35/28, B23Q 35/10, B23Q 35/04, B23Q 35/48, B24B 49/10, B24B 49/16, B24B 49/04

(54) **APPARATUS FOR DEBURRING AND TRIMMING THE EDGES OF SLAB-SHAPED OBJECTS**

(30) Priority: 28.12.2020 IT 202000032534
(71) Applicant: Tecnomec Borghi S.r.l., 41042 Fiorano Modenese MODENA (IT)
(72) Inventor: BORGHI, Gianfranco, 41042 Fiorano Modenese (MO) (IT)
(74) Representative: Crugnola, Pietro

(57) **Abstract**

An apparatus (1) for deburring and trimming the edges of slab-shaped products (6) comprises a portal-shaped structure (2) arranged astride a conveying line (5) for conveying said products (6), said portal-shaped structure (2) comprising a pair of uprights (3) arranged on sides opposite the conveying line (5) and a crosspiece (4) that connects together the uprights (3) and is arranged above the conveying line (5) in a direction that is perpendicular to an advancement direction (F) of said products (6) on said conveying line (5). The apparatus (1) further comprises a first deburring and trimming tool (16), driven by a first motor (15) supported on a first support structure (7) that can be moved along said crosspiece (4) by a second motor (9), and a second deburring and trimming tool (31), driven by a third motor (30) supported on a second support structure (8) that can be moved along said crosspiece (4) by a fourth motor (10). The first support structure (7) comprises a first part (7a), intended to abut on a first longitudinal edge (18) of a product (6), and a second part (7b) that supports said first motor (15), wherein said first part (7a) and said second part (7b) are connected together in an adjustable manner, and the second support structure (8) comprises a first part (8a), intended to abut on a second longitudinal edge (29) of a product (6) opposite said first longitudinal edge (18), and a second part (8b) that supports said third motor (30), wherein said first part (8a) and said second part (8b) are connected together in an adjustable manner.

A tool (54) for an apparatus (1) for deburring and trimming the edges of slab-shaped products (6) comprises a first fixed part (56) and a second movable part (57) that can be moved in a direction parallel to a rotation axis (55) of the tool (54) so as to vary a distance (H) between said first fixed part (56) and said second movable part (57) between a set minimum value and a set maximum value.

## Description

### BACKGROUND OF THE INVVENTION

The invention relates to an apparatus for deburring and trimming the edges of slab-shaped objects, in particular the edges of slab-shaped products made of ceramic material.

### BACKGROUND OF THE INVENTION

In the prior art, apparatuses are known for deburring and trimming the edges of products made of slab-shaped material that comprise a portal structure placed transversely above a conveying line conveying the products, in a direction that is perpendicular to the advancement direction of the products along the conveying line.

A pair of deburring and trimming devices arranged on sides opposite the conveying line conveying the products is supported on the portal structure.

Each deburring and trimming device can move along a crosspiece of the portal structure that extends in a direction that is perpendicular to the advancement direction of the ceramic products along the conveying line.

Each deburring and trimming device comprises a grinding wheel driven by a respective motor.

The unit consisting of the grinding wheel and the respective motor is fitted to a support element that is movable along the crosspiece of the portal structure and is so connected to the support structure that the position thereof in relation thereto can be adjusted in a direction parallel to the crosspiece of the portal and in a direction that is perpendicular to the crosspiece of the portal. Further, the unit consisting of the grinding wheel and of the respective motor can be rotated in a plane perpendicular to the advancement direction of the products on the conveying line to vary the tilt of the tool with respect to the edge of the ceramic product to be deburred and trimmed.

In order to obtain precise deburring and trimming of the edges of a ceramic product, the tool has to be positioned precisely against the edge to be deburred and trimmed and the pressure of the tool on said edge has to remain substantially constant whereas the edge moves with respect to the tool through the effect of the advancement of the product along the conveying line.

When a ceramic product reaches near the portal structure, the deburring and trimming devices, placed initially at the opposite ends of the portal structure, are brought near until the deburring and trimming tools are brought into contact with a pair of opposite edges of the product.

In the apparatuses known from the prior art, the position of the deburring and trimming tools with respect to the products cannot be varied during machining of a product. This means that because of corrugations of the edges, or tilts of the product with respect to the advancement direction along the conveying line, the pressure of the tools against the edges of the product does not remain constant and deburring and trimming of the edges is thus not homogeneous. Further, also wear to the tools affects the pressure exerted by the tools against the products and requires periodic adjustment of the position of the tools with respect to the edges of the products, to offset the effects of the aforesaid wear, with consequent loss of time and productivity.

DE 200 06 752 U1 describes an apparatus for chamfering the corners of slabs of stone or concrete.

The apparatus comprises a portal structure arranged astride a slab-conveying line.

The portal structure comprises two uprights arranged on the sides of the conveying line and connected to a crosspiece arranged above the conveying line.

A support structure is fixed to each upright, on which a tool driven by an electric motor is supported by a pneumatic suspension. A probe is connected to the tool stiffly to abut on the upper surface of a slab in transit on the conveying line.

In the absence of a slab on the portal structure, the pneumatic suspension maintains the tools in a position below the upper edge of a slab having the minimum possible thickness. When a slab reaches the portal structure, the probes are pushed upwards as far as the height of the upper face of the slab and lift the tools until the probes are brought into contact with the upper edge of the slab to be machined.

In DE 200 06 752 U1 there is no indication that the support structure of each motor is movable in a transverse direction along the crosspiece, so as to enable the apparatus to machine slabs of a different width and to machine not only the side edges of the slabs but also the front edge and the rear edge.

IT TO20 100630 discloses an apparatus for chamfering the edges of tiles.

The apparatus comprises two grinding units arranged on sides opposite a tile-conveying line. Each grinding unit comprises a stationary frame to which a first carriage that is movable in a direction that is vertical with respect to the frame and a second carriage that is movable in a direction that is horizontal with respect to the first carriage are connected. To the second carriage, a motor that drives a grinding tool, and two probes intended to abut respectively on the upper surface and a side edge of a tile are fixed. The reciprocal position of the grinding tool and of the probes is not adjustable. Further, the apparatus is not provided with any portal along a crosspiece of which the frame can be moved that supports the tool and the probes.

The apparatus is not able to machine tiles of a different width, or to machine the front and rear edges of the tiles.

### DESCRIPTION OF THE INVENTION

One object of the present invention is to provide an apparatus for deburring and trimming the edges of slab-shaped objects, in particular ceramic products, in transit along a conveying line that enables homogeneous deburring and trimming along the entire extent of the edges of the products to be obtained, also in the presence of corrugations of the edges and tilts of the products.

Another object of the invention is to provide an apparatus that is able to automatically compensate the effects of wear on the tools.

The aforesaid objects are achieved with an apparatus according to claim 1.

Owing to the invention, it is possible to deburr and trim with precision and homogeneously the edges of slab-shaped objects, in particular ceramic products, even when the products arrive along the conveying line tilted with respect to the advancement direction along said line. The invention also enables the deburring and trimming tasks to be performed with precision also in the presence of corrugations of the edges of the products and the progressive wear to the tools performing the tasks to be compensated.

### SHORT DESCRIPTION OF THE DRAWINGS

Further features and advantages of the invention will be clear from the following description that is given merely by way of non-limiting example with reference to the enclosed drawings, in which:
Figure 1 is an isometric view of an apparatus for deburring and trimming the edges of slab-shaped objects according to the invention;
Figure 2 is an isometric view of the apparatus according to the invention, rotated by 180° with respect to the view of Figure 1:
Figure 3 is a frontal view of the apparatus according to the invention;

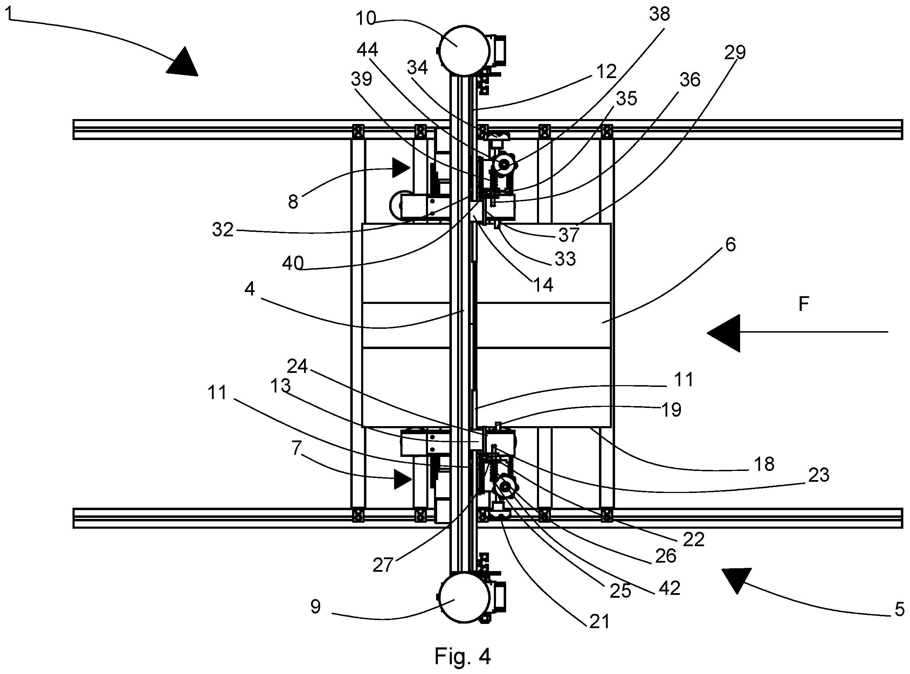

Figure 4 is a top view of the apparatus according to the invention;
Figures 5 and 6 illustrate an embodiment of a tool usable in the apparatus according to the invention;
Figure 7 is a frontal view of an apparatus according to the invention, which illustrates the operation of the tool of Figures 5 and 6;
Figure 7A is an enlarged detail of Figure 7;
Figures 8 and 9 illustrate an operating mode of an apparatus according to the invention.

An apparatus 1 according to the invention comprises a portal structure 2 consisting of a pair of uprights 3 connected together by a crosspiece 4.

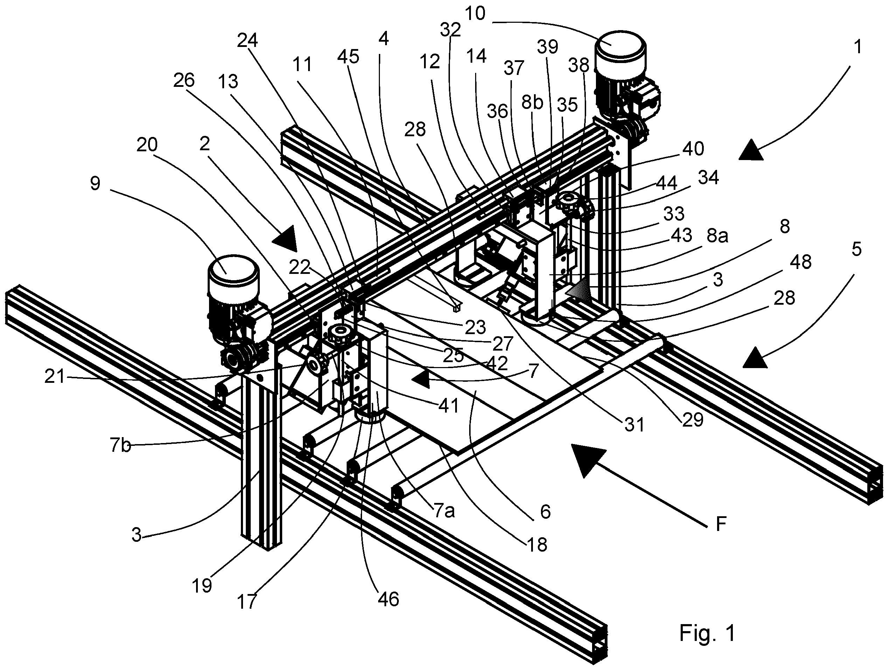

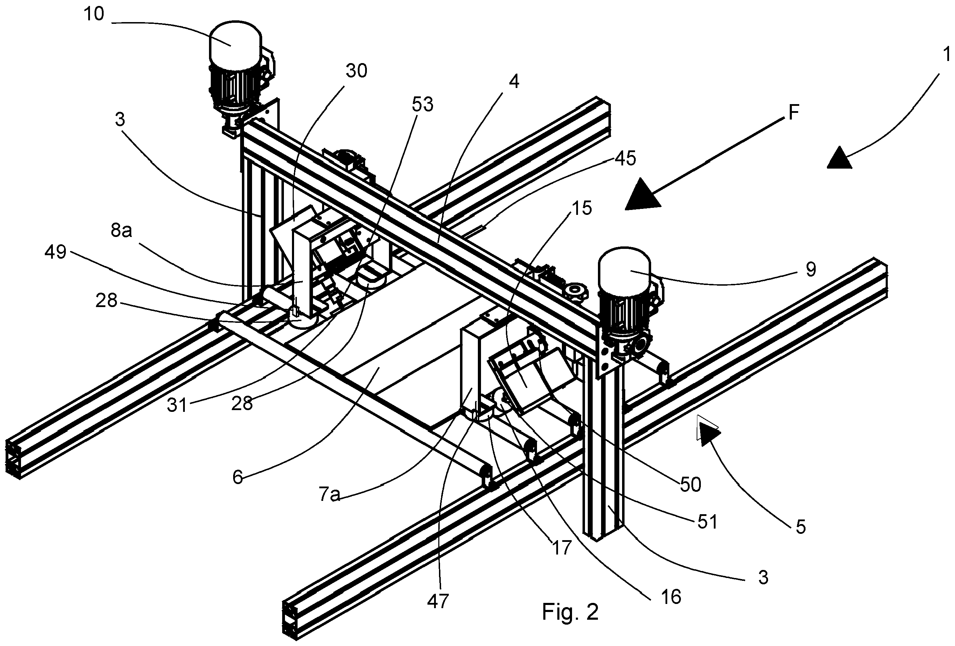

The portal structure 2 is configured to be arranged astride a conveying line 5 for slab-shaped ceramic products 6, with the uprights 3 arranged on sides opposite the conveying line 5, outside the conveying line 5, and the crosspiece 4 arranged in a direction substantially perpendicular to the advancement direction of the ceramic products along the conveying line, said advancement direction being indicated by an arrow F in Figures 1 and 2.

A first support structure 7 and a second support structure 8 are connected to the crosspiece 4 so as to being able to move along the crosspiece 4.

The first support structure 7 comprises a first part 7a, to which a first pair of free rotating wheels 17 is fixed that are intended to abut on a first longitudinal edge 18 of the product 6, and a second part 7b that supports a first motor 15, that drives a first deburring and trimming tool 16, for example a grinding wheel. The expression "first longitudinal edge 18" means an edge of the product 6 that is substantially parallel to the advancement direction F of the product 6 on the conveying line 5.

The first part 7a and the second part 7b are connected together by a first adjusting screw 19 that enables the first part 7a to be moved with respect to the second part 7b in a direction parallel to the crosspiece 4. The first adjusting screw 19 can be rotated manually by a first driving knob 21.

A second adjusting screw 41, with a vertical axis, i.e. perpendicular to the conveying plane for conveying the products 6, is used to adjust the position of the first motor 15 and of the first deburring and trimming tool 16 in a direction that is perpendicular to said conveying plane. The second adjusting screw 41 can be rotated manually by a second driving knob 42.

The first motor 15 is connected to the second part 7b of the first support structure 7 so as to be able to be rotated around a first fulcrum 50 (Figure 2), in order to be able to vary the orientation of a rotation axis 51 of the first tool 16, for example to rotate the rotation axis 51 from the position illustrated in Figure 2 to a position in which the rotation axis 51 is perpendicular to a conveying plane of the products 6 on the conveying line 5.

The first support structure 7 is connected to the crosspiece 4 by a first shoe 20 that permits sliding of the first support structure 7 along the crosspiece 4. The first shoe 20 is fixed to the first part 7a of the first support structure 7.

The first support structure 7 is driven to move along the crosspiece 4 by a second motor 9 that rotates a first threaded bar 11, with which a first nut screw 13 is coupled connected to the first support structure 7. The second motor 9 is supplied by an inverter that enables the first support structure 7 to be positioned with great precision on the crosspiece 4, with a precision even in the order of a hundredth of a millimetre.

The first nut screw 13 is connected to first bracket 24 to which an end 23 is fixed of a first pin 22 that traverses a wall 27 of the second part 7b of the first support structure 7. On the first pin 22, a first spring 26 is fitted, the ends of which are fixed to the wall 27 and to a head 25 of the first pin 22, opposite said end 23. The first spring 26 can be compressed by moving the first nut screw 13 by the second motor 9 in the direction of the second support structure 8. The force of reaction generated by the first compressed spring 26 is used to compensate the effects of wear of the first deburring and trimming tool 16 on the work pressure of the tool.

The second support structure 8 comprises a first part 8a, to which a second pair of free rotating wheels 28 is fixed that are intended to abut on a second longitudinal edge 29 of the product 6, opposite the first longitudinal edge 18, and a second part 8b that supports a third motor 30, that drives a second deburring and trimming tool 31, for example a grinding wheel.

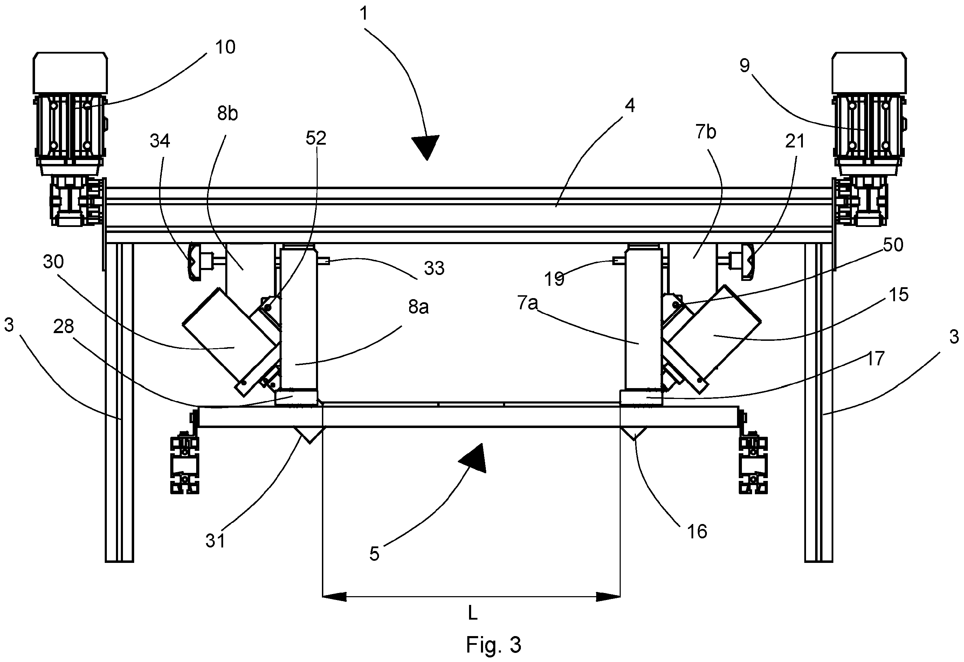

The third motor 30 is connected to the second part 8b of the second support structure 8 so as to be able to be rotated around a second fulcrum 52 (Figure 3), in order to be able to vary the orientation of a rotation axis 53 of the second tool 31, for example to rotate the rotation axis 53 from the position illustrated in Figure 2 to a position in which the rotation axis 53 is perpendicular to a conveying plane for conveying the products 6 on the conveying line 5.

The first part 8a and the second part 8b are connected together by a third adjusting screw 33 that enables the first part 8a to be moved with respect to the second part 8b in a direction parallel to the crosspiece 4. The third adjusting screw 33 can be rotated manually by a third driving knob 34.

A fourth adjusting screw 43, with a vertical axis, i.e. perpendicular to the conveying plane for conveying the products 6, is used to adjust the position of the third motor 30 and of the second deburring and trimming tool 31 in a direction that is perpendicular to said conveying plane. The fourth adjusting screw 43 can be rotated manually by a fourth driving knob 44.

The second support structure 8 is connected to the crosspiece 4 by a second shoe 32 that permits sliding of the first support structure 8 along the crosspiece 4.

The second support structure 8 is driven to move along the crosspiece 4 from a fourth motor 10 that rotates a second threaded bar 12 with which a second nut screw 14 is coupled that is connected to the second support structure 8. The fourth motor 10 is driven by a further inverter that permits high precision positioning of the second support structure 8 on the crosspiece 4, with precision even in the order of a hundredth of a millimetre.

The second nut screw 14 is connected to a second bracket 37 to which an end 36 is fixed of a second pin 35 that traverses a wall 40 of the second part 8b of the first support structure 8. To the second pin 35, a second spring 39 is fitted, the ends of which are fixed to the wall 40 and to a head 38 of the second pin 35, opposite said end 36. The second spring 39 can be compressed by moving the second nut screw 14 by the fourth motor 10 in the direction of the first support structure 7. The force of reaction generated by the compressed second spring 39 is used to compensate the effects of wear of the second deburring and trimming tool 31 on the work pressure of the tool.

The apparatus 1 according to the invention further comprises a first sensor 45, supported on the crosspiece 4, a second sensor 46 and a third sensor 47 supported on the first part 7a of the first support structure 7 and positioned so as to be able to detect the position of the first longitudinal edge 18 of a product 6 in transit through the apparatus 1 according to the invention, a fourth sensor 48 and a fifth sensor 49 supported on the first part 8a of the second support structure 8 and positioned so as to be able to detect the second longitudinal edge 29 of a product 6 in transit through the apparatus 1 according to the invention. The first sensor 45 is used to detect the presence of a product 6 that reaches the conveying line 5, before the product 6 comes into contact with the first pair of free rotating wheels 17 and the second pair of free rotating wheels 28. The second sensor 46 and the third sensor 47 are used to detect the position of the first longitudinal edge 18 of a product 6 with respect to the first support structure 7, so as to detect possible corrugations of the first longitudinal edge 18. The fourth sensor 48 and the fifth sensor 49 are used to detect the position of the second longitudinal edge 29 of a product 6 with respect to the second support structure 8, so as to detect possible corrugations of the second longitudinal edge 29.

The second sensor 46 is arranged on one side of the first support structure 7 facing the inlet zone of the products 6 entering the apparatus 1 according to the invention, whereas the third sensor 47 is arranged on one side of the first support structure 7 facing the exit zone of the products 6 exiting the apparatus 1 according to the invention.

Similarly, the fourth sensor 48 is arranged on one side of the second support structure 8 facing the inlet zone of the products 6 entering the apparatus 1 according to the invention and the fifth sensor 49 is arranged on one side of the second support structure 8 facing the exit zone of the products 6 exiting the apparatus 1 according to the invention.

The operation of the apparatus 1 according to the invention is disclosed below.

Initially, before a product 6 conveyed by the conveying line 5 reaches near the apparatus 1 according to the invention, the first support structure 7 and the second support structure 8 are arranged in an initial position in which they are at a reciprocal distance that is greater than a nominal width L of the product 6, measured in a direction that is perpendicular to the advancement direction F.

When the first sensor 45 detects the arrival of a product 6 near of the apparatus 1 according to the invention, the first support structure 7 and the second support structure 8 are brought near so that the reciprocal distance thereof is slightly less than a nominal width L of the product 6.

Said reciprocal distance is chosen so as to permit a set work pressure of the first deburring and trimming tool 16 and of the second deburring and trimming tool 31.

The reciprocal distance between the first support structure 7 and the second support structure 8 is moreover further adjusted according to the actual position of the first longitudinal edge 18 of the product 6 with respect to the first support structure 7, detected by second sensor 46 and the second longitudinal edge 29 of the product 6, detected by the third sensor 48.

The first pair of free rotating wheels 17 and the second pair of free rotating wheels 28 are used to guide the product 6 through the apparatus 1 according to the invention and to maintain the product 6 aligned on the advancement direction F.

Possible variations in the pressure exerted by the first deburring and trimming tool 16 and by the second deburring and trimming tool 31 are detected by measuring the current absorption of the first motor 15, which drives the first deburring and trimming tool 16, and of the second motor 30 that drives the second deburring and trimming tool 31. In order to maintain the work pressure of the first deburring and trimming tool 16 and of the second deburring and trimming tool 31 against the respective edges of the product 6 substantially constant, the position of the first support structure 7 and of the second support structure along the crosspiece 4 is adjusted according to the variation of the current absorbed by the first motor 15 and by the second motor 30, approaching by moving the respective support structure towards the edge of the product if the current absorbed by the respective motor decreases with respect to a set reference value and moving the support structure away if the current absorbed by the respective motor increases with respect to the reference value.

The position of the first support structure 7 and of the second support structure 8 can be adjusted also with the help of the second sensor 46, of the third sensor 47, of the fourth sensor 48 and of the fifth sensor 49, by means of which it is possible to detect instant by instant the actual position of the longitudinal edges 18 and 29 of the product 6 with respect to the support structures 7 and 8 and automatically adjust the position of the first support structure 7 and of the second support structure 8 such that the deburring and trimming tools can exert a set work pressure on said edges and follow possible corrugations thereof by maintaining the work pressure substantially unaltered.

When the third sensor 47 and the fifth sensor 49 no longer detect the presence of the product 6, the first support structure 7 and the second support structure 8 are returned to said initial position.

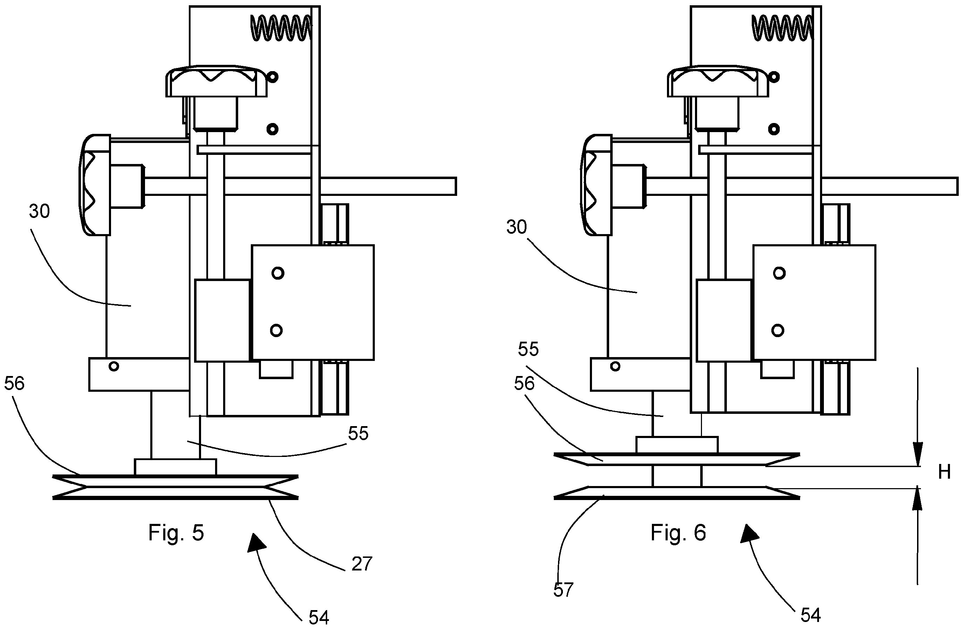

In Figures 5 and 6, an embodiment is illustrated of a deburring and trimming tool 54 that can be fitted to the first motor 15 and to the third motor 31 for deburring and trimming the edges of a product 6.

In Figures 5 and 6, the tool 54 is shown fitted to the third motor 30 but can also be fitted to the first motor 15.

The tool 54 is used with the rotation axis 55 thereof oriented perpendicularly to the conveying plane for conveying the products 6.

The tool 54 has a first fixed part 56 and a second movable part 57 that can be moved in a direction parallel to the rotation axis 55 of the tool 54 so as to vary a distance H between the first fixed part 56 and the second movable part 57 between a set minimum value, which can be substantially equal to zero, as illustrated in Figure 5 and a set maximum value as illustrated in Figure 6.

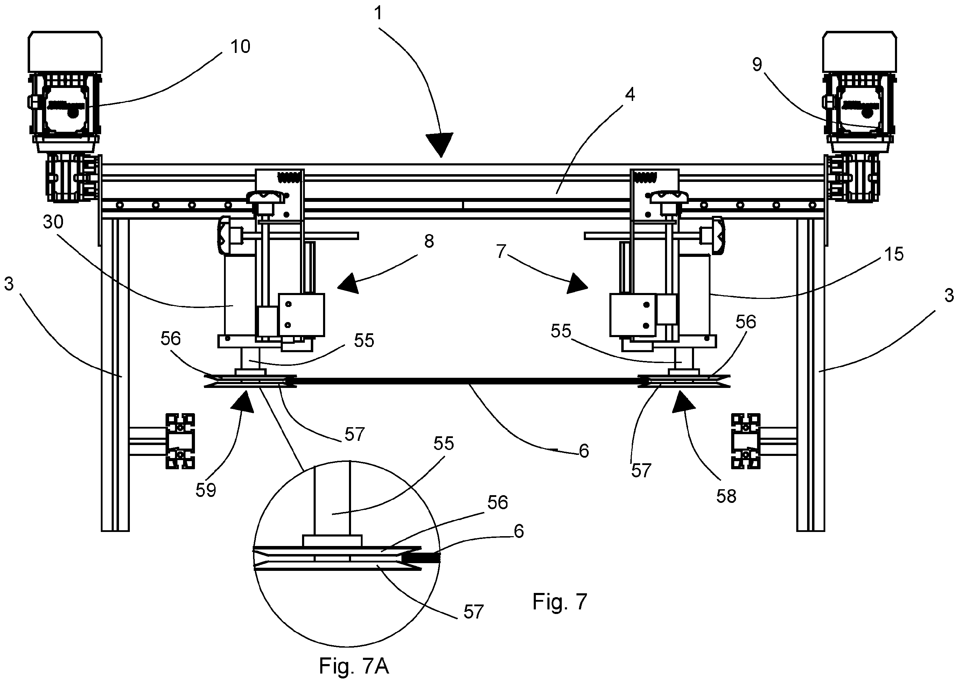

In Figures 7 and 7A, an apparatus according to the invention is illustrated in which a first deburring and trimming tool 58 driven by the first motor 15 and a second deburring and trimming tool 59 driven by the second motor 30 are fitted. Both the first tool 58 and the second tool 59 are identical to the tool 54 illustrated in Figures 5 and 6.

In Figure 7, the conveying line 5 has been omitted for reasons of clarity.

Figure 7A illustrates the operation of the deburring and trimming tools 58 and 59. As can be seen, the distance between the fixed part 56 and the movable part 57 is adjusted according to the thickness of the products 6, such that the fixed part 56 comes into contact with an upper corner of an edge of the product 6 and the movable part comes into contact with a lower corner of said edge, so as to deburr and trim said upper and lower corners.

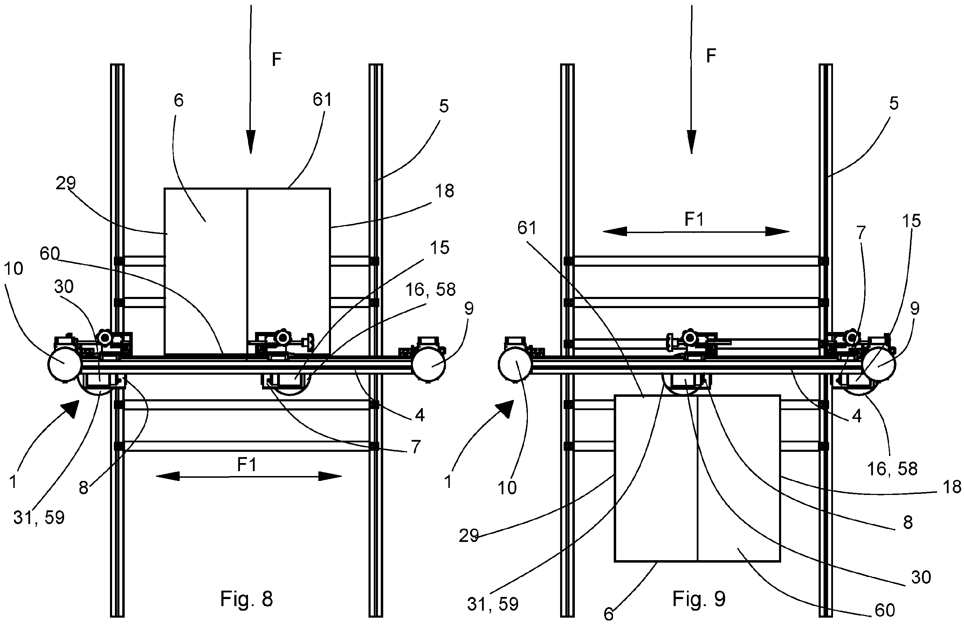

In Figures 8 and 9, it is shown that an apparatus 1 according to the invention can be used to deburr and trim not only the first longitudinal edge 18 and second longitudinal edge 29 of a product 6, but also a first transverse edge 60 and a second transverse edge 61 of the product 6 that are perpendicular to the first longitudinal edge 18 and to the second longitudinal edge 29.

In order to deburr and trim the first transverse edge 60 and the second transverse edge 61, the first tool 16, or 58 and the second tool 31 or 59, are arranged with a vertical rotation axis, i.e. perpendicular to the conveying plane for conveying the products 6.

When a product 6 reaches a first set position at the crosspiece 4 (shown in Figure 8), the conveying line 5 is stopped and the first support structure 7, moved along the crosspiece 4 in the direction of the double arrow F1, whereas the first motor 15 drives the first tool 16, or 58.

The first set position is so chosen that the first tool 16, or 58 comes into contact with the first transverse edge 60 to trim and deburr the first transverse edge 60, whereas the first support structure 7 moves along the crosspiece 4.

At the end of the operation of deburring and trimming the first transverse edge 60, the first support structure 7 is returned to the start position and the product 6 is advanced again in the conveying direction F, so that the tools 16 and 31, or 58 and 59 can deburr and trim the first longitudinal edge 18 and second longitudinal edge 29, as explained previously.

The operation of deburring and trimming the first transverse edge 60 can be performed by using the second tool 31 or 59, rather than the first tool 16 or 58 and then moving along the crosspiece 4 the second support structure 8, rather than the first support structure 7.

At the end of the operation of trimming and deburring the first longitudinal edge 60, the product 6 is stopped in a second set position, shown in Figure 9, so chosen that by moving the first support structure 7 or the second support structure 8 along the crosspiece 4 it is possible to trim and deburr the second transverse edge 61 with the first tool 16, or 58, or with the second tool 31 or 59, identically to the operation of deburring and trimming the first transverse edge 60.

At the end of the operation of deburring and trimming of the second transverse edge 61, the product 6 is removed from apparatus 1 according to the invention by moving the product 6 in the conveying direction F, towards further machining tasks.

## Claims

1. Apparatus (1) for deburring and trimming the edges of slab-shaped products (6) comprising:
a portal-shaped structure (2) arranged astride a conveying line (5) of said products (6), said portal-shaped structure (2) comprising a pair of uprights (3) arranged on sides opposite the conveying line (5) and a crosspiece (4) that connects together the uprights (3) and is arranged above the conveying line (5) in a direction that is perpendicular to an advancement direction (F) of said products (6) on said conveying line (5);
a first deburring and trimming tool (16, 58), driven by a first motor (15) supported on a first support structure (7) that can be moved along said crosspiece (4) by a second motor (9),
a second deburring and trimming tool (31; 59) driven by a third motor (30) supported on a second support structure (8) that can be moved along said crosspiece (4) by a fourth motor (10),
**characterized in that** said first support structure (7) comprises a first part (7a) intended to abut on a first side edge (18) of a product (6) and a second part (7b) that supports said first motor (15), wherein said first part (7a) and said second part (7b) are connected together in an adjustable manner, and **in that** said second support structure (8) comprises a first part (8a),
intended to abut on a second side edge (29) of a product (6) opposite said first side edge (18),
and a second part (8b) that supports said third motor (30), wherein said first part (8a) and
said second part (8b) are connected together in an adjustable manner.

2. Apparatus (1) according to claim 1, wherein said first part (7a) and said second part (7b) of said first support structure (7) are connected together by a first adjusting screw (19) that enables the first part (7a) to be moved with respect to the second part (7b) in a direction parallel to the crosspiece (4).

3. Apparatus (1) according to claim 1, or 2, wherein said first part (8a) and said second part (8b) of said second support structure (8) are connected together by a third adjusting screw (33) that enables the first part (8a) to be moved with respect to the second part (8b) in a direction parallel to the crosspiece (4).

4. Apparatus (1) according to one of the preceding claims, wherein the first support structure (7) is connected to the crosspiece (4) by a first shoe (20) that enables the first support structure (7) to slide along the crosspiece (4), wherein the first shoe (20) is fixed to the first part (7a) of the first support structure (7) and/or the second support structure (8) is connected to the crosspiece (4) by a second shoe (32) that permits sliding of the second support structure (8) along the crosspiece (4), wherein the second block (32) is fixed to the first part (8a) of the second support structure (8).

5. Apparatus (1) according to one of the preceding claims, wherein the first part (7a) of the first support structure (7) is provided with a first pair of free rotating wheels (17) intended to abut on the first side edge (18) of a product (6) and/or the first part (8a) of the second support structure (8) is provided with a second pair of free rotating wheels (28) intended to abut on the second side edge (29) of a product (6).

6. Apparatus (1) according to one of the preceding claims, wherein the second motor (9) rotates a first threaded bar (11) with which a first nut screw (13) is coupled connected to the first support structure (7).

7. Apparatus (1) according to claim 8, wherein the first nut screw (13) is connected to first bracket (24) to which an end (23) of a first pin (22) is fixed that traverses a wall (27) of the second part (7b) of the first support structure (7), wherein to the first pin (22) a first spring (26) is fitted the ends of which are fixed to the wall (27) and to a head (25) of the first pin (22), opposite said end (23).

8. Apparatus (1) according to one of the preceding claims, wherein the fourth motor (10) rotates a second threaded bar (12) with which a second nut screw (14) is coupled that is connected to the second support structure (8).

9. Apparatus (1) according to claim 10, wherein the second nut screw (14) is connected to a second bracket (37) to which an end (36) of a second pin (35) is fixed that traverses a wall (40) of the second part (8b) of the second support structure (8), wherein to the second pin (35) a second spring (39) is fitted the ends of which are fixed to the wall (40) and to a head (38) of the second pin (35), opposite said end (36).

10. Apparatus (1) according to one of the preceding claims, further comprising a first sensor (45) arranged and configured so as to detect the arrival of a product (6) near the apparatus (1) along the conveying line (5), wherein said first sensor (45) is supported on the crosspiece (4).

11. Apparatus (1) according to one of the preceding claims, further comprising a second sensor (46) and a third sensor (47) supported on the first part (7a) of the first support structure (7), wherein said second sensor (46) and said third sensor (47) are arranged and configured so as to detect the position with respect to the first support structure (7) of the first side edge (18) of a product (6) in transit through the apparatus (1).

12. Apparatus (1) according to one of the preceding claims, further comprising a fourth sensor (48) and a fifth sensor (49) supported on the first part (8a) of the second support structure (8), wherein said fourth sensor (48) and said fifth sensor (49) are arranged and configured so as to detect the position with respect to the second support structure (8) of the second side edge (29) of a product (6) in transit through the apparatus (1).

13. Apparatus (1) according to one of the preceding claims, wherein said first motor (15) is connected to the second part (7b) of the first support structure (7) so as to be able to be rotated around a first fulcrum (50) and/or said second motor (30) is connected to the second part (8b) of the second support structure (8) so as to be able to be rotated around a second fulcrum (52).

14. Apparatus (1) according to one of the preceding claims, wherein said first tool (58) and said second tool (59) comprise a first fixed part (56) and a second movable part (57) that can be moved in a direction parallel to a rotation axis (55) of the tool (58; 59) so as to vary a distance (H) between said first fixed part (56) and said second movable part (57) between a set minimum value and a set maximum value.

15. Tool (54) for an apparatus (1) for deburring and trimming the edges of slab-shaped products (6), **characterized in that** it comprises a first fixed part (56) and a second movable part (57) che can be moved in a direction parallel to a rotation axis (55) of the tool (54) so as to vary a distance (H) between said first fixed part (56) and said second movable part (57) between a set minimum value and a set maximum value, to adapt the tool to the thickness of the products (6), such that the fixed part (56) comes into contact with an upper corner of an edge of the product (6) and the movable part comes into contact with a lower corner of said edge.
